# EUROPEAN PATENT SPECIFICATION

(11) **EP 2 674 093 B1**
(45) Date of publication and mention of the grant of the patent: **01.07.2020**
(21) Application number: 13171992.4
(22) Date of filing: 14.06.2013
(51) Int. Cl.: A47L 15/50, A01K 1/03

(54) **Device for loading a washing machine with components to be washed and apparatus comprising this device**
Vorrichtung zum Laden einer Waschmaschine mit zu waschenden Komponenten und Gerät mit dieser Vorrichtung
Dispositif de chargement d'une machine à laver avec des composants à laver et appareil comprenant ce dispositif

(30) Priority: 15.06.2012 IT MI20121044
(43) Date of publication of application: 18.12.2013
(73) Proprietor: IWT S.r.L., 21020 Casale Litta (IT)
(72) Inventor: Vitali, Michele, 21020 Angera (IT); Tosi, Roberto, 21016 Luino (IT)
(74) Representative: Torti, Carlo Maria Emilio

(56) References cited:
- EP-A1- 2 245 975
- WO-A1-01/24618
- GB-A- 1 205 641
- US-A- 4 917 248
- US-A1- 2001 015 051
- US-A1- 2006 108 298
- US-A1- 2006 254 992
- US-A1- 2007 247 039

## Description

### FIELD OF THE INVENTION

The present invention relates to a system for loading and unloading a washing machine with a plurality of components to be washed.

More in particular, the present invention relates to a system adapted to facilitate the loading and unloading of an automated washing machine of the tunnel type with the preventively disassembled components of animal containment cages normally used within an animal room.

In particular, the present invention relates to a system for supporting the disassembled components of containment cages for laboratory animals during washing in automatic washing machines as well as an apparatus for handling said device.

### BACKGROUND OF THE INVENTION

As is known, cages that are usually inserted into containment shelves, suitable for containing laboratory animals in controlled environmental conditions, are usually used in research laboratories.

In particular, these cages generally comprise a plurality of members, some of them structural, such as basin and lid, others necessary for performing ancillary functions, such as for example feeding trough, drinking bottle and the like.

Each cage thus comprises at least one basin suitable for containing the animals, at least one suitable lid to hermetically seal the basin, and generally at least one feeding trough, usually produced by means of a metal grid or lattice structure suitably shaped to hold feed.

The basin in which the animals are contained is usually filled with a bed of material suitable for at least partially absorbing the excrement of the animals, typically sawdust or other suitable material. This bed is indicated in the sector with the term "bedding". Since the bedding allows, as previously mentioned, animal excrement to be collected and in part absorbed, it must be periodically replaced. Analogously, the cages must be periodically washed and sterilised as the animals can be infected by pathogens and, in any case, the hygienic conditions in which the animals are kept are extremely important as unsuitable hygienic conditions could negatively impact the outcome of the scientific experimentation itself. Numerous, sometimes even hundreds, of cages are generally used in an animal room, therefore automated washing machines are generally used in the sector for handling and washing operations.

In particular, the present invention concerns a device and an apparatus for optimising the automated washing operations of the components of the animal containment cages when they are washed by means of a tunnel washing machine, of the type known in the prior art.

When continuous washing machines of the tunnel type are used for the washing, wherein a conveyor belt moves the disassembled cages inside the washing machine, the process first provides a pick-up step of the cages from the shelves on which they are housed, a step wherein these cages are opened and disassembled, the content of the basin is emptied into a special collection hopper of the soiled bedding and, lastly, a step wherein the disassembled components of the cage are placed on the washing machine conveyor belt.

The steps of picking-up the cages from the shelves, disassembling the cages and the emptying the bedding, generally by tilting the basin, as well as of positioning the components on the conveyor belt of the tunnel washing machine, can be performed manually by an operator or by means of automated processes that envisage the use of anthropomorphic robots, for example according to the teachings of European patent application no. 10759828 In the name of the same applicant.

Once the cage has been disassembled into its components, the positioning thereof on the conveyor belt of the tunnel washing machine is particularly important in the event of the pick-up operations of the washed components at the exit of the washing tunnel being automated, or in the event of there being a robot at the exit of the washing tunnel that picks up the cage components from the conveyor belt. Indeed, the robot placed at the exit of the machine must be able to unequivocally find the various cage components on the conveyor belt, so that it can pick them up and then correctly assemble them, and these components must thus be exactly positioned on the conveyor belt.

Robots that are capable of picking up and also handling four components at a time, for example four side-by-side basins, can be used to optimise cage handling operations and in this event the tolerances on the positioning of the components on the conveyor belt are even more restrictive, under penalty of a failure to grip of the gripping hand of the robot.

In order to obtain the precise control of the positioning of the cage components on the conveyor belt, the solutions that are currently known in the prior art provide for the washing machine conveyor belt to be equipped with indexed references, i.e. suitable abutments that are integral to the frames that constitute the conveyor belt. For a more precise understanding of the technical problem, the know solution must be briefly illustrated.

The conveyor belt of tunnel washing machines of the known type is constituted by handling chains that are longitudinally arranged at the edges of the belt, by means of which the belt itself is moved along a longitudinal advancement direction, and by a defined supporting surface between the chain conveyors that is substantially mesh-structured. This surface represents the supporting plane for the components to be subjected to washing, and is typically formed by a metal grid structure comprising a plurality of abutments that are suitably positioned so as to constitute seats suitable for housing the components, these seats therefore being fixed with respect to the wire mesh of the conveyor belt.

The seats thus allow the components to be arranged on the belt according to a predetermined order, so that the robot placed at the exit of the washing machine finds each component in the correct position, according to the predetermined order stored in the control unit of the robot, and can indeed pick up the cage components and process them correctly.

According to what is known in the prior art, the tunnel washing machine comprises a portion of belt at the entrance of the tunnel to allow loading of the components to be subjected to washing and an outlet portion of the belt at the exit of the tunnel to allow them to be picked up.

The solutions known in the prior art for the conveying of the components to be subjected to washing inside of washing machines of the tunnel type are afflicted by some drawbacks.

A first drawback consists in that abutments are provided in order to index the conveyor belt, to hold in place the components to be subjected to washing, directly connected to the conveyor belt structure. This entails the belt of the machine being indexed for a specific type of cage. If the type of cage is changes, the indexing of the conveyor belt must be modified: it can indeed be necessary to provide for new indexes in order to both space those components that may have different dimension than the preceding components from each another in a different way, and to replace the abutments in the event that the shape of the new components requires abutments having a different shape.

This results in the indexing systems of the conveyor belt of a type in the prior art not being versatile in the least as in the event of the washing machine having to process cages of a different type, the machine must be stopped to change the indexing of the belt by moving the abutments for the various components and/or replacing the old abutments with those suitable for housing the new components. This involves extended machine downtime, which translates into high costs due to decreases productivity, and high labour costs due to the need to disassemble and reassemble the belt.

A further drawback that afflicts the indexed belts of the type known in the prior art consists in that the entire conveyor belt is subjected to thermal shocks during the wash cycle. In particular, the chains that form part of the conveyor belt are particularly affected by the resulting deformations subjected to substantial temperature excursions during the wash cycle, which involves thermal expansions of a non negligible nature that negatively impact the very narrow positioning tolerances of the indexes of the conveyor belt, and thus of the components conveyed by them, which are necessary to allow gripping of the components by the automated gripping means, such as an anthropomorphic robot for example. Conveyor belt chains are particularly affected by the change in temperature due to the fact that said chains have a length equal to the length of the conveyor belt which, having to cover the entire tunnel washing machine, can reach even 15 or 20 m The thermal expansions that affect every point of the chains manifest along their entire length and lead to total elongations in the order of millimetres at the exit of the tunnel washing machine.

Since the supporting surface on which the abutments to house the cage components are arranged is constrained to the chain conveyor itself, the elongations in the chain structure consequently produce a variation of the absolute position of the seats with respect to the non-deformed initial position.

Albeit minor, this effect can however be such that the spacing between the seats no longer matches the dimensions of the cage components and that the latter are thus no longer integrally housed.

In addition, the cage components at the exit of the washing machine are no longer, with respect to the absolute spatial reference system of the robot, in the same predetermined position in which they were to be found when placed on the conveyor belt at the entrance of the washing machine, and the narrow tolerances required for correct gripping on the part of the robot at the tunnel exit are not therefore met.

The consequence thereof is that it is not possible to automate the picking up process of the components exiting the tunnel washing machine through the use of a robot as the necessary tolerances as regards the positioning of the components in the space are not met.

This limit is even more pronounced in consideration that, in order to increase the productivity of the process, the robots generally handle multiple components simultaneously, therefore the positioning of each component must be very precise, with tolerances in the order of one tenth of a millimetre.

Examples of devices and systems according to the prior art for handling components are known from US 2001/015051.

### SUMMARY OF THE INVENTION

The aim of the present invention is therefore to provide a solution for loading a washing machine with components to be subjected to washing and an apparatus comprising this device, which allow the unresolved drawbacks of the systems of the type known in the prior art to be overcome.

In particular, within the context of this aim, the object of the present invention is to provide a suitable solution for eliminating the problems of non-compliance with the positioning tolerances of the components subjected to washing at the exit of the washing machine.

The object of the present invention is also to provide a system comprising a device and an apparatus that uses said device, that is particularly versatile, allowing cages of different shapes and dimensions to be processed without having to intervene on the washing machine conveyor belt.

These and other objects, which will become clearer following a detailed description of a preferred embodiment of the present invention, are achieved by a system having the features as set out in claim 1; further embodiments of the system according to the present invention are defined by the dependent claims.

### LIST OF DRAWINGS

The technical features of the present invention, and the advantages thereof, will become clearer from the below description with reference to the accompanying drawings, in which:
Figure 1 is a perspective view of a device for loading a washing machine;
Figure 2 is a perspective assembly view of an apparatus comprising the device of figure 1;
Figure 3 is a first perspective view of the device on which a plurality of components to be subjected to washing are positioned, in particular components of a cage containment cage for laboratory animals;
Figure 4 is a second perspective view of the device of figure 3, from a different angle;
Figure 5 shows a perspective view of an unloading station that is part of the apparatus;
Figure 6 shows a perspective view of a loading station that is part of the apparatus;

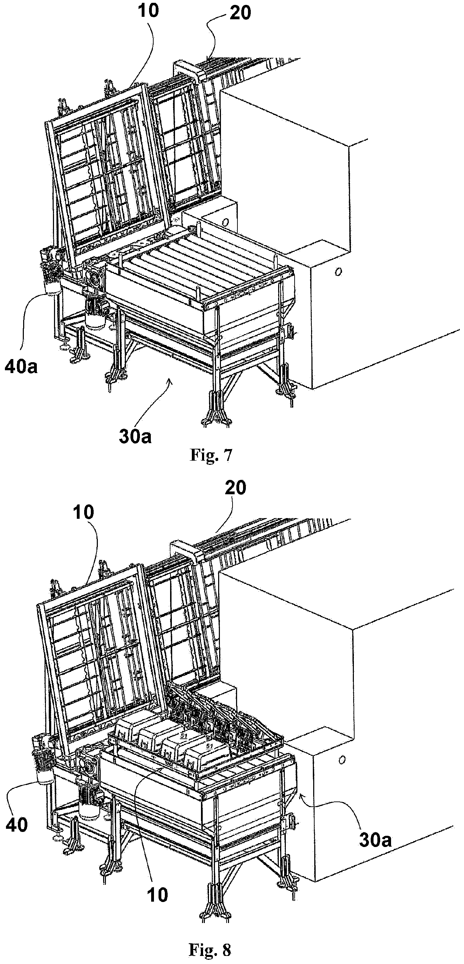

Figure 7 shows a perspective view of a detail of the apparatus associated with the entrance zone of a tunnel washing machine;
Figure 8 shows the same view of Figure 7, wherein the loading device is filled with the components to be subjected to washing;
Figure 9 shows a perspective view of a detail of the apparatus associated to the exit zone of a tunnel washing machine;
Figure 10 shows a further a perspective assembly view of the entrance zone of a tunnel washing machine with associated apparatus for handling the loading device.

### DETAILED DESCRIPTION

Both this description and these drawings are to be considered for illustrative and non-limiting purposes only; the present invention can therefore be implemented according to other and different embodiments that fall within the scope of protection as defined by the accompanying claims;

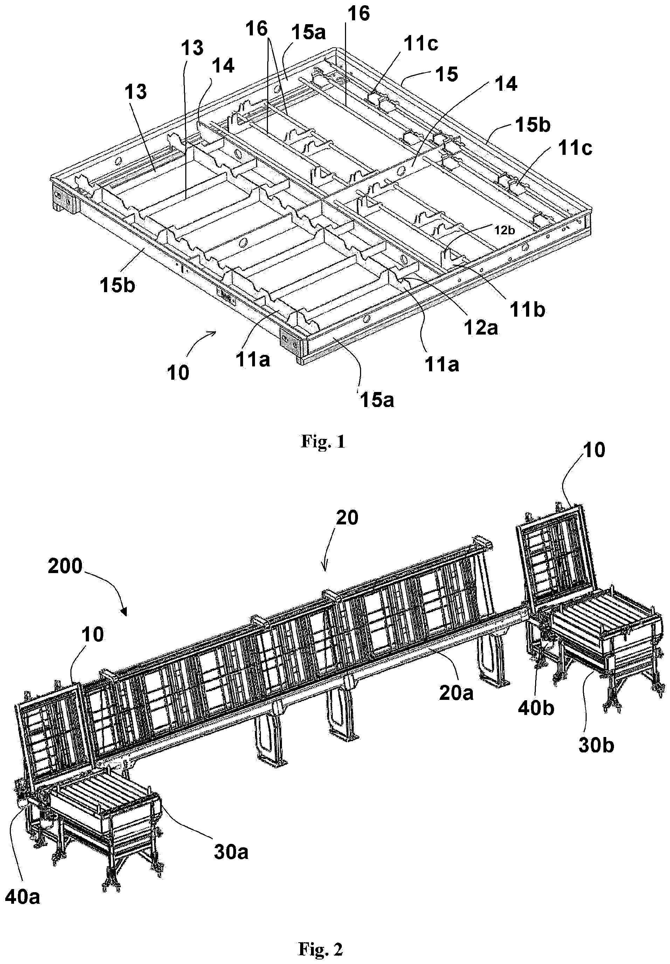

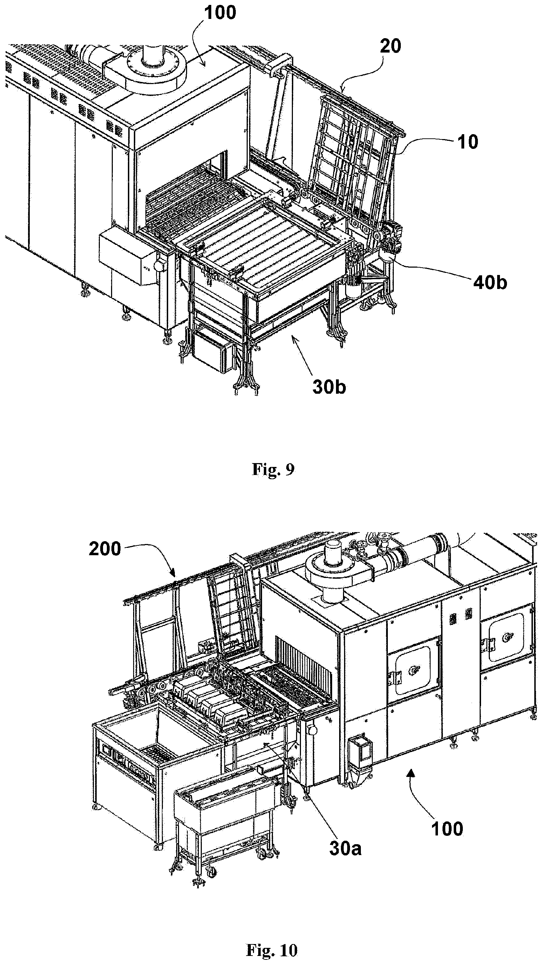

With particular reference to Figure 1, the device **10** for loading a washing machine with components to be subjected to washing according to the present invention comprises a perimeter frame **15** advantageously having a quadrangular shape. With reference to Figure 10, the components to be subjected to washing advance in the tunnel washing machine **100** of the type considered herein in a longitudinal direction. The advancement direction of the belt inside the washing machine thus having been defined as a longitudinal direction, the perimeter frame **15** of the device **10** according to the present invention comprises a pair of longitudinal sides **15a** and a pair of transverse sides **15b.**

Further longitudinal and transverse reinforcement members **14** can contribute to the rigidity of the structure.

A plurality of abutment means adapted to hold the components to be subjected to washing in a desired position are suitably positioned within the perimeter defined by the perimeter frame **15.**

A device **10,** configured to accommodate the disassembled components of containment cages for laboratory animals is shown in the preferred embodiment of the present invention illustrated in the accompanying drawings.

The cages considered herein each comprise a basin **51,** a lid **52** and an accessory, constituted in the example by a "wire lid", i.e., a wire mesh member **53** to support other accessories, such as for example the feeding trough, which is not shown in the drawings.

The device **10** therefore has a plurality of abutment means comprising abutments **11a, 11b, 11c,** that are suitably positioned and shaped to house these members. In particular, said abutment means comprise a pair of transverse abutments **11a** that connected to each other by longitudinal, preferably rod-like supports **13,** that are also part of the abutment means, and define a mesh that is adapted to receive a plurality of basins **51.**

Even more in particular, said transverse abutments **11a** will have a plurality of grooves **12a** with opening facing upwards that define a seat for housing the edge of the basins **51,** which are positioned upside down on said mesh, so that the open side of the basin faces downwards.

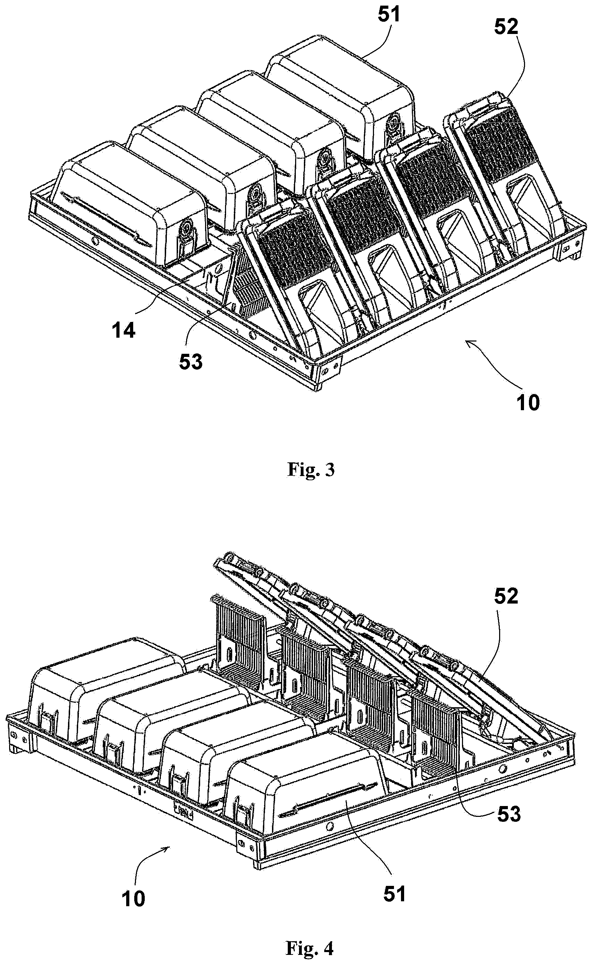

The structure of the device **10** shown in Figure 1 is thus suitable for housing, in the mesh portion identified by the transverse abutments **11a** and by the longitudinal bars **13,** four basins **51** that are side by side, as can be better seen in Figures 3 and 4.

The abutment means further comprise abutments **11b** that are suitable for housing the accessories, in the example constituted by the "wire lid" **53.** For this purpose, the abutments **11b** have an upper recess **12b** into which a guide present on the side edge of the "wire lid" is inserted. Of course, in order to house accessories of different shapes or sizes, the abutments **11b** can be shaped differently. In order to facilitate any replacement of said abutments **11b** so as to house different types of accessories, the abutments **11b** are positioned on transverse rods **16,** which are also part of the abutment means that extend between the two longitudinal sides **15a** of the perimeter frame **15** and are fixed thereto.

In this case also, the device **10,** illustrated by way of example in the drawings, is arranged to house four "wire lids" **53** that are side by side.

The abutment means further comprise abutments **11C,** which are suitable for housing the lids **52** of the cages and are suitably shaped and positioned to house four lids **52** that are arranged side by side and, in order to reduce the longitudinal dimensions of the device **10** so as to optimise washing machine productivity, are able to maintain said lids **52** in an oblique position.

The abutments **11C** are also advantageously positioned on transverse rods **16,** which are also part of the abutment means, so as to be easily replaced or moved in the event that the device **10** should need to house components of different shapes and/or sizes to be subjected to washing.

The device **10** for loading a washing machine of the tunnel type **100** with components **51, 52, 53,** to be subjected to washing according to the present invention therefore forms a modular system, wherein the abutment means **11a, 11b, 11c, 13, 16,** can be positioned in a different way and the abutments **11a, 11b, 11c,** replaced with other differently shaped abutments where there is a need to house components of different shapes and/or sizes to be subjected to washing.

According to the foregoing, the abutment means and in particular the abutments **11a, 11b,** and **11c** will be such as to ensure a removable fastening of the component to be subjected to washing that is at the same time sufficiently stable during the washing stage and easily removable from the device **10** in the pick-up step of the components from the device at the end of the washing.

The arrangement of the abutment means on the device **10** is such as to allow the different components to be subjected to washing in a predetermined position to be maintained. This is visible in Figures 3 and 4 in particular.

Advantageously, the abutment means will be fixed onto the device **10** so that the predetermined position of the various components on the frame is the best, both as regards the cleaning quality thereof, and of the reduced size of the frame with the same components loaded. In this sense, it is possible to note that the basins **51** are maintained horizontal with the cavity of the basin itself facing downwards. Thus the basins **51** can be invested by jets of water and detergent during washing without water accumulating inside the basins, and there will be no areas that are not reached by these jets, it thus being possible to ensure an adequate cleaning quality.

Conversely, the "wire lid" **53** and lids **52** are maintained by abutment means in a position that permits the longitudinal dimensions of the device **10** to be minimised. The predetermined position in which the members to be subjected to washing **51, 52** and **53** are maintained allows indexing from the position of the various members, and thus automation of the loading and unloading operations of the components to be subjected to washing to and from the device **10.**

So as to be able to automate the step of unloading the output components from the washing machine, it is of fundamental importance that the position of the components subjected to washing remains the same at the entrance of the washing machine and at the exit from the washing machine. It is thus possible for the output robot, which is programmed on the basis of the fact that a certain component is present in a certain position, to pick up the various components. Thanks to the device **10** according to the present invention, the problem afflicting the systems of the type known in the prior art, wherein due to the sum of thermal deformations occurring at the components of the conveyor belt, particularly at the side handling chains that have lengths equal to at least the length of the washing tunnel (about 15-20 metres), the components subjected to washing that were placed directly onto the conveyor belt were subject, with respect to an absolute spatial reference, to movements even in the order of the millimetre with respect to the entrance position at the belt.

Since the device **10** according to the present invention has contained dimensions, in particular, the device shown in the drawings by way of example, and capable of supporting four disassembled cages has maximum dimensions in the order of a metre or slightly greater, even if the material that the device is made of should undergo thermal deformations due to the temperatures reached during the wash cycle, these deformations would however be sufficiently contained to maintain the changes in positioning of the components subjected to washing within the tolerances deemed acceptable for the proper functioning of a robotic gripping member, constituted for example by a gripping clamp of an anthropomorphous robot capable of picking up multiple components simultaneously.

According to the preferred embodiment described herein, the device **10** is not constrained to the conveyor belt of the machine **100** with any fastening means, but it simply rests on the conveyor belt. It is indeed of no importance that the device **10**, and thus the components positioned thereon are perfectly positioned in a predetermined position on the conveyor belt in order to correctly complete the washing operations of the components. For this purpose, the weight of the device and of the components positioned thereon is thus sufficient to ensure that the device **10** is correctly moved by the belt of the washing machine **100.**

In order to ensure the correct positioning of the device **10** in the space at the exit of the washing tunnel, so that a gripping robot can pick up the cleaned components as described above, it is sufficient that the device **10** itself be aligned and stopped in a predetermined position.

For this purpose, guide means suitable for aligning the frame **15** of device **10** with respect to the longitudinal advancement direction will be suitably provided at the exit of the washing tunnel, for example two lateral guides that are oblique with respect to the direction of advancement, and stopping means, for example a transverse abutment adapted to stopping the movement of the device **10** in a desired position.

In order to increase the level of automation of the washing process of components by means of a machine of the tunnel type **100,** a handling apparatus **200** of said device **10,** which is also part of the present invention, was implemented.

The apparatus **200** according to the present invention is illustrated in Figure 2, some details being more clearly visible in drawings 5 to 10.

The apparatus **200** according to the present invention comprises handling means **20** of said device **10,** adapted to return the device itself, once unloaded of the clean components, from the exit of the washing machine to the entrance, so that the same device **10** can be used in a new wash cycle.

Said handling means comprise a chain conveyor device **20a**, which extends in a direction parallel to the longitudinal advancement direction of the washing tunnel and is suitable for moving said device **10** in the opposite direction with respect to the advancement direction of the washing machine conveyor belt.

Said chain conveyor device **20a** thus extends in parallel to the washing machine and has a length equal to that of the washing tunnel, so that this length can be used to move multiple loading devices **10** simultaneously, as illustrated in Figure 2.

The apparatus **200** according to the present invention further comprises a first tilting device **40a** at the exit of the devices **10** from the chain conveyor device **20a,** which will be positioned at the entrance of the washing machine **100,** which picks up the loading device **10** from the handling means **20** and deposits it onto a loading station **30a,** provided as mentioned at the entrance of the washing machine **100,** and a second tilting device **40b** at the entrance of the devices **10** at the chain conveyor device **20a** , which picks up the devices **10** from the exit side of the washing machine and couples it to the chain conveyor device.

In order to facilitate the loading/unloading operations by the tilting devices **40a, 40b,** the apparatus according to the present invention thus also includes a loading station **30a** that is placed at the entrance of the washing tunnel and an unloading station **30b,** placed at the exit of the washing tunnel.

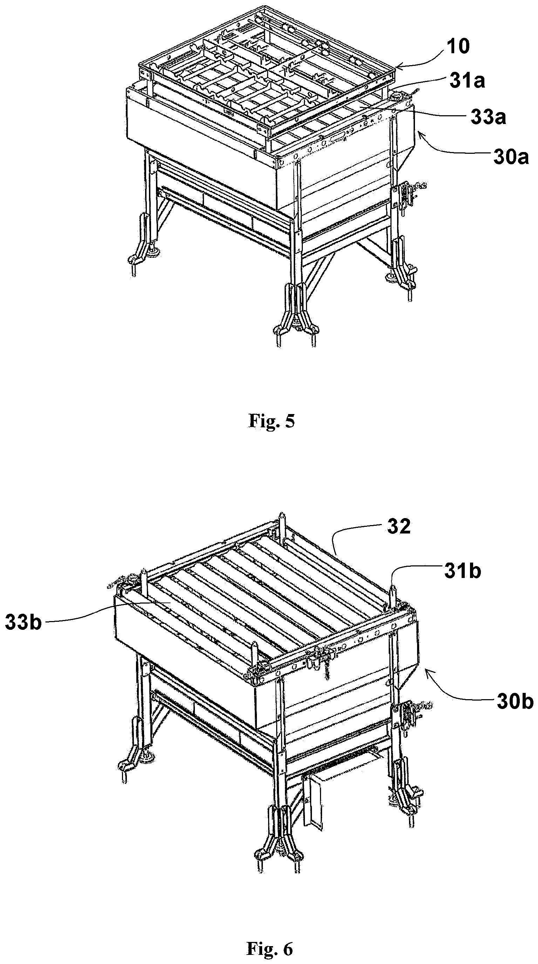

With reference to figures 5 and 6, it is possible to note an embodiment of the loading station **30a** and of the unloading station **30b** respectively.

Said stations **30a** and **30b** preferably comprise a roller conveyor that defines a supporting surface for the device **10** and is suitable for longitudinally moving said device.

In particular, the loading station **30a** allows the indexed positioning of indexed device **10** on the roller conveyor, the device **10** being maintained in an indexed position during the loading operation of the components to be subjected to washing

The loading station and the unloading station further comprise lifting means **31a, 31b** adapted to maintaining said device **10** in a raised position with respect to the roller conveyor **33a, 33b.** In the embodiment illustrated in figures 5 and 6, said lifting means comprise retractable pegs that are placed at the vertices of the roller conveyors.

Operation of the loading and unloading stations is as follows.

During the loading of the components, the retractable pegs **31a** of the loading station **30a** will be in extended position, as shown in Figure 5, so that the device **10** remains raised with respect to the roller conveyor and is in a predetermined and indexed position, so that the loading operations can be performed in an automated manner, for example by means of a robot.

When the loading operations of components are completed, the pegs **31a** are retracted in their seat. The loading device **10** thus rests on the rollers **33a** and is thus moved onto the portion of conveyor belt at the entrance zone of the machine **100.** The pegs **31a** can be moved electrically, in this case the signal as well as control of the movement is managed by the automated washing system. The robot that loads the components onto the loading device **10** is indeed programmed to position a certain number of components. On completion of the loading operations it is the same central control unit of the system that sends the signal to the loading station **30a** relating to completion of the operations and controls the lowering of the pegs **31a.**

Analogously, the output roller conveyor **30b** defines a pick-up position from which the components of the cages present on the frame **10** are picked up at the end of a washing step.

As mentioned, guide means suitable for correctly orienting the load device **10** can be suitably provided at the end of the conveyor belt so that it arrives on the roller conveyor **33b** of the unloading station **30b** in the correct position.

In this case stop means **32** are suitably provided on the unloading station **30b** to stop the advancement of the loading device **10.** Once in position against the stop means **32,** the loading device **10** is raised by the pegs **31b,** so that it comes to be in a known position, each component present on the indexed device **10** being in the predetermined position known to the central control unit, which can consequently control an automated pick-up system, for example constituted by an anthropomorphic robot.

According to a preferred embodiment, the apparatus according to the present invention further comprises first tilting means **40a** placed at the entrance roller conveyor **30a** and second tilting means **40b** placed at the exit of the roller conveyor **30b.** Said first and second tilting means **40a, 40b** may advantageously comprise a mechanical arm driven by an electric motor. In substance, by means of the first and second tilting means **40a, 40b,** the loading device **10** is respectively picked up from the chain conveyor device **20a** of the handling means **20** and positioned on the loading station **30a** at the entrance of the washing machine, and picked up from the unloading station **30b** and placed on the chain conveyor device **20a** in an automated manner.

The full handling cycle of a loading device **10** is substantially as follows.

Once the loading device **10** has been loaded with the components to be subjected to washing, it is lowered by means of the pegs **31a** and placed on the roller conveyor **33a.** The loading device **10** is thus moved inside the tunnel washing machine.

At the exit of the washing machine, the loading device **10** is directed by suitable guide means towards the unloading station **30b.** Here it comes to the roller conveyor **33b,** and its movement is stopped by stop means **32.** The loading device **10** is then lifted from the roller conveyor by activation of the second pegs **31b,** activation that can be suitably controlled by the central control unit of the apparatus, and a robot proceeds with the unloading of the clean components from the loading device **10.**

Once the device **10** has been unloaded, the second tilting means **40b** are lowered and remove the device **10** from the unloading station **30b,** lifting it and positioning it on the chain conveyor device **20a** of the handling means **20.**

The loading device **10** thus picked up is transported to the entrance of the washing machine where the first tilting means **40a** grip it and lower it onto the loading station **30a,** where it will remain raised by the roller conveyor **33a** until completion of the loading operations by means of the first pins **31a.**

The apparatus according to the present invention can thus simultaneously handle a plurality of loading devices **10,** allowing continuous loading of the tunnel washing machine **100** using a small number of loading devices **10.**

The apparatus thus devised is susceptible to a number of modifications and variants, all of which fall under the inventive concept; in addition, all the details can be replaced by other technically equivalent members.

In practice, any materials and any contingent shapes and sizes can be used depending on requirements and the state of the art.

## Claims

1. System for loading components (51, 52, 53) to be subjected to washing into a tunnel washing machine (100), said system comprising a device (10) to be loaded with said components (51, 52, 53), said device comprising a perimeter frame (15), abutment means (11a, 11b, 11c, 13, 16) positioned within the perimeter defined by said frame (15), said abutment means being adapted to house, in a predetermined position, said components (51, 52, 53) to be subjected to washing, said system comprising an apparatus handling said device (10), said apparatus (200) comprising handling means (20) comprising a chain conveyor device (20a) and being adapted to be positioned with respect to said tunnel washing machine so that said conveyor device (20a) extends in a direction parallel to the longitudinal advancement direction of the tunnel washing machine conveyor belt and is suitable for moving said device (10) in the opposite direction with respect to the advancement direction of the washing machine conveyor belt from the exit of a tunnel washing machine (100) to the entrance of said tunnel washing machine (100), **characterized in that** said apparatus (200) further comprises:
- a loading station (30a), adapted to be placed at the entrance of said washing machine (100) and to house said device (10) for the loading operations;
- an unloading station (30b), adapted to be placed at the exit of said machine (100) and to house said device (10) for the unloading operations;
- a first tilting device (40a) adapted to be placed at the entrance of said washing machine (100) and to pick up said device (10) from said handling means, to tilt said device (10) and to deposit said device (10) onto said loading station (30a);
- a second tilting device (40b) adapted to be placed at the exit of said machine (100) and to pick up said device (10) from said unloading station (30b), to tilt said device (10) and couple it with said handling means (20).

2. System according to claim 1, **characterized in that** said abutment means of said device (10) to be loaded with said components comprise a plurality of supports (13, 16), which are fixed to said frame (15) and upon which a plurality of abutments (11a, 11b, 11c) are movably positioned, which are adapted to support said components (51, 52, 53).

3. System according to the preceding claim, **characterized in that** said supports comprise longitudinal (13) and transverse (16) bars which are reversibly fixed to said frame (15), thus forming a modular system.

4. System according to the preceding claim, **characterized in that** at least some of said abutments (11c) are slidingly associated with said transverse bars (16).

5. System according to the preceding claim, wherein said abutments (11a, 11b, 11c) comprise, in an upper portion, notches (12a, 12b) adapted to removably house said components (51, 52, 53).

6. System according to the preceding claim, wherein said frame (15) and said abutment means (11a, 11b, 11c) are made of stainless steel.

7. System according to one of claims 1 to 6, **characterized in that** said loading station (30a) and said unloading station (30b) respectively comprise a roller conveyor (33a, 33b).

8. System according to claim 7, wherein each of said roller conveyors (33a, 33b) comprise lifting means (31a, 31b), adapted to maintain said device (10) in a raised and indexed position with respect to the roller conveyor (33a, 33b).

## Patentansprüche

1. System zum Laden von Komponenten (51, 52, 53) in eine Tunnelwaschmaschine (100), die einer Wäsche unterzogen werden sollen, wobei das System eine Vorrichtung (10) aufweist, die mit den Komponenten (51, 52, 53) beladen werden soll, wobei die Vorrichtung einen umlaufenden Rahmen (15) und Stützmittel (11a, 11b, 11c, 13, 16) aufweist, die innerhalb des durch den Rahmen (15) definierten Umfangs angeordnet sind, wobei die Stützmittel geeignet sind, die zu waschenden Komponenten (51, 52, 53) in einer vorbestimmten Position aufzunehmen, wobei das System eine Einrichtung aufweist, die die Vorrichtung (10) händelt, wobei die Einrichtung (200) Handlungsmittel (20) aufweist, die eine Kettenfördervorrichtung (20a) aufweisen und geeignet sind, so gegenüber der Tunnelwaschmaschine positioniert zu werden, dass sich die Fördervorrichtung (20a) in einer Richtung parallel zur Längsförderrichtung des Förderbands der Tunnelwaschmaschine vom Ausgang einer Tunnelwaschmaschine (100) zum Eingang der Tunnelwaschmaschine (100) erstreckt,
**dadurch gekennzeichnet, dass** die Vorrichtung (200) weiter aufweist:
- eine Beladestation (30a), geeignet, um am Eingang der Waschmaschine (100) angeordnet zu werden und die Vorrichtung (10) für die Beladungsvorgänge aufzunehmen;
- eine Entladestation (30b), geeignet, um am Ausgang der Maschine (100) angeordnet zu werden und die Vorrichtung (10) für die Entladungsvorgänge aufzunehmen;
- eine erste Kippvorrichtung (40a), geeignet, um am Eingang der Waschmaschine (100) angeordnet zu werden und die Vorrichtung (10) von den Transportmitteln aufzunehmen, um die Vorrichtung (10) zu kippen und die Vorrichtung (10) auf der Beladestation (30a) abzulegen;
- eine zweite Kippvorrichtung (40b), geeignet, um am Ausgang der Maschine (100) angeordnet zu werden und die Vorrichtung (10) von der Entladestation (30b) aufzunehmen, um die Vorrichtung (10) zu kippen und um diese mit den Transportmitteln (20) zu verbinden.

2. System gemäß Anspruch 1, **dadurch gekennzeichnet, dass** die Stützmittel der Vorrichtung (10), die mit den Komponenten beladen werden soll, eine Vielzahl von Stützen (13, 16) aufweist, die an dem Rahmen (15) befestigt sind und auf denen eine Vielzahl von Auflager (11a, 11b, 11c) beweglich positioniert sind, die geeignet sind, die Komponenten (51, 52, 53) zu stützen.

3. System gemäß dem vorigen Anspruch, **dadurch gekennzeichnet, dass** die Stützen Längs- (13) und Querstreben (16) aufweisen, die reversibel an dem Rahmen (15) befestigt sind und somit ein modulares System bilden.

4. System gemäß dem vorigen Anspruch, **dadurch gekennzeichnet, dass** zumindest einige der Stützmittel (11c) gleitend mit den Querstreben (16) verbunden sind.

5. System gemäß dem vorigen Anspruch, wobei die Stützmittel (11a, 11b, 11c) in einem oberen Bereich Kerben (12a, 12b) aufweisen, die geeignet sind, die Komponenten (51, 52, 53) abnehmbar aufzunehmen.

6. System gemäß dem vorigen Anspruch, wobei der Rahmen (15) und die Stützmittel (11a, 11b, 11c) aus rostfreiem Stahl gefertigt sind.

7. System gemäß einem der Ansprüche 1 bis 6, **dadurch gekennzeichnet, dass** die Beladestation (30a) und die Entladestation (30b) jeweils eine Rollenbahn (33a, 33b) aufweisen.

8. System gemäß Anspruch 7, wobei jede der Rollenbahnen (33a, 33b) Hebemittel (31a, 31b) aufweist, die geeignet sind, die Vorrichtung (10) in einer gegenüber der Rollenbahn (33a, 33b) angehobenen Raststellung zu halten.

## Revendications

1. Système de chargement de composants (51, 52, 53) devant être soumis à un lavage dans une machine à laver en tunnel (100), ledit système comprenant un dispositif (10) devant être chargé avec lesdits composants (51, 52, 53), ledit dispositif comprenant un cadre périmétrique (15), des moyens de butée (11a, 11b, 11c, 13, 16) positionnés à l'intérieur du périmètre défini par ledit cadre (15), lesdits moyens de butée étant conçus pour accueillir, dans une position prédéterminée, lesdits composants (51, 52, 53) devant être soumis à un lavage, ledit système comprenant un appareil manipulant ledit dispositif (10), ledit appareil (200) comprenant des moyens de manipulation (20) comprenant un dispositif convoyeur à chaîne (20a) et étant conçu pour être positionné par rapport à ladite machine à laver en tunnel de sorte que ledit dispositif convoyeur (20a) s'étend dans une direction parallèle à la direction longitudinale d'avancement de la bande de convoyeur de machine à laver en tunnel et est approprié pour déplacer ledit dispositif (10) dans la direction opposée par rapport à la direction d'avancement de la bande de convoyeur de machine à laver, de la sortie d'une machine à laver en tunnel (100) à l'entrée de ladite machine à laver en tunnel (100), **caractérisé en ce que** ledit appareil (200) comprend en outre :
- une station de chargement (30a), conçue pour être placée à l'entrée de ladite machine à laver (100) et pour accueillir ledit dispositif (10) pour les opérations de chargement ;
- une station de déchargement (30b), conçue pour être placée à la sortie de ladite machine (100) et pour accueillir ledit dispositif (10) pour les opérations de déchargement ;
- un premier dispositif d'inclinaison (40a) conçu pour être placé à l'entrée de ladite machine à laver (100) et pour saisir ledit dispositif (10) à partir desdits moyens de manipulation, pour incliner ledit dispositif (10) et pour déposer ledit dispositif (10) sur ladite station de chargement (30a) ;
- un second dispositif d'inclinaison (40b) conçu pour être placé à la sortie de ladite machine (100) et pour saisir ledit dispositif (10) à partir de ladite station de déchargement (30b), pour incliner ledit dispositif (10) et le coupler avec lesdits moyens de manipulation (20).

2. Système selon la revendication 1, **caractérisé en ce que** lesdits moyens de butée dudit dispositif (10) devant être chargé avec lesdits composants comprennent une pluralité de supports (13, 16), qui sont fixés audit cadre (15) et sur lesquels une pluralité de butées (11a, 11b, 11c) sont positionnées de manière mobile, qui sont conçues pour porter lesdits composants (51, 52, 53).

3. Système selon la revendication précédente, **caractérisé en ce que** lesdits supports comprennent des barres longitudinales (13) et transversales (16) qui sont fixées de manière réversible sur ledit cadre (15), formant ainsi un système modulaire.

4. Système selon la revendication précédente, **caractérisé en ce qu'**au moins certaines desdites butées (11c) sont associées de manière coulissante auxdites barres transversales (16).

5. Système selon la revendication précédente, dans lequel lesdites butées (11a, 11b, 11c) comprennent, dans une partie supérieure, des encoches (12a, 12b) conçues pour accueillir de manière amovible lesdits composants (51, 52, 53).

6. Système selon la revendication précédente, dans lequel ledit cadre (15) et lesdits moyens de butée (11a, 11b, 11c) sont constitués d'acier inoxydable.

7. Système selon l'une des revendications 1 à 6, **caractérisé en ce que** ladite station de chargement (30a) et ladite station de déchargement (30b) comprennent respectivement un convoyeur à rouleaux (33a, 33b).

8. Système selon la revendication 7, dans lequel chacun desdits convoyeurs à rouleaux (33a, 33b) comprend des moyens de levage (31a, 31b), conçus pour maintenir ledit dispositif (10) dans une position relevée et indexée par rapport au convoyeur à rouleaux (33a, 33b).
